# EUROPÄISCHE PATENTSCHRIFT

(11) **EP 1 332 902 B1**
(45) Veröffentlichungstag und Bekanntmachung des Hinweises auf die Patenterteilung: **07.03.2012**
(21) Anmeldenummer: 03000168.9
(22) Anmeldetag: 07.01.2003
(51) Int. Cl.: B60J 7/04, B60J 7/14

(54) **Kraftfahrzeug mit zumindest einem beweglichen Dachteil**
Motorvehicle with at least one movable roof part
Véhicule automobile avec au moins une partie de toit mobile

(30) Priorität: 30.01.2002 DE 20201411 U
(43) Veröffentlichungstag der Anmeldung: 06.08.2003
(73) Patentinhaber: Wilhelm Karmann GmbH, 49084 Osnabrück (DE)
(72) Erfinder: Kuhr, Jürgen, 49086 Osnabrück (DE)
(74) Vertreter: Kronthaler, Schmidt & Coll.

(56) Entgegenhaltungen:
- DE-C- 10 001 941
- DE-C- 19 634 507
- US-A- 5 558 388
- US-A- 5 769 483

## Beschreibung

Die Erfindung betrifft ein Kraftfahrzeug nach dem Oberbegriff des Anspruchs 1, wie aus DE 100 01 941 C1 bekannt.

Ein derartiges Fahrzeug, das beispielsweise als Cabriolet- oder Targa-Fahrzeug ausgebildet sein kann, muß im Fall eines Überschlags eine ähnlich hohe Stabilität aufweisen wie ein Fahrzeug mit einem vollständig festen, unbeweglichen Dach. Hierzu sind die seitlichen Holme des Windschutzscheibenrahmens, die sogenannten A-Säulen, in einer Weise auszuführen, die ein Einknicken dieser Holme auch bei Belastung des Windschutzscheibenrahmens mit dem Fahrzeuggewicht, wie sie bei einem Überschlag auftreten kann, möglichst verhindert.

Hierzu ist es bekannt, die A-Säule verstärkt auszuführen, also beispielsweise feste Trägerstrukturen einzubringen oder die A-Säule mit metallischen Schäumen zu versteifen.

In jedem Fall ist das Fahrzeuggewicht erhöht. Die Herstellung eines derartig optimierten Windschutzscheibenrahmens ist aufwendig.

Der Erfindung liegt das Problem zugrunde, hier eine Verbesserung zu schaffen.

Die Erfindung löst dieses Problem durch ein Kraftfahrzeug mit den Merkmalen des Anspruchs 1. Vorteilhafte Ausgestaltungen sind in den Ansprüchen 2 bis 11 angegeben.

Mit der erfindungsgemäßen Ausbildung des Kraftfahrzeugs können die Unterstützungsträger des beweglichen Dachteils zur Aussteifung der A-Säule herangezogen werden. Dabei ist es sowohl möglich, daß das Dachteil manuell entfernt wird, beispielsweise wenn es aus Kunststoff besteht, als auch, daß es in geöffneter Stellung im Fahrzeug verbleibt und beispielsweise unter eine Heckscheibe oder in einen karosserieseitigen Aufnahmeraum unterhalb der Fensterbrüstungslinie verlagert wird.

Besonders günstig ist dabei durch die Profile der A-Säule ein Aufnahmekanal gebildet, der in seinen Ausmaßen im wesentlichen exakt der Quererstreckung der Träger für das bewegliche Dachteil entspricht. Dann können die Träger spielfrei in den A-Säulen gehalten sein. Es ergibt sich somit die additive Wandungsstärke der Träger und der umgebenden Profile als resultierende Wandungsstärke, wodurch der Aussteifungseffekt hervorgerufen wird. Eine Gleitbeschichtung wie etwa Teflon, Rollen oder ähnliches können für die Verlagerung der Träger in den A-Säulen vorgesehen sein.

Eine besonders einfache Konstruktion ergibt sich, wenn die Träger rohrförmig ausgebildet sind.

Der Bedienungskomfort ist erhöht, wenn eine motorische Verlagerbarkeit der Träger vorgesehen ist. Dann kann etwa das bewegliche Dachteil - ebenfalls motorisch - heckwärts verfahren werden, und anschließend können die Träger nach vorne in die Windschutzscheibenholme eingezogen werden.

Weitere Vorteile und Einzelheiten der Erfindung ergeben sich aus nachfolgend beschriebenen und in der Zeichnung dargestellten Ausführungsbeispielen des Gegenstandes der Erfindung. In der Zeichnung zeigt:
- Fig. 1: ein erfindungsgemäßes Kraftfahrzeug bei geschlossenem Dach in schematischer Ansicht, wobei das Fahrzeug als Targa-Fahrzeug ausgebildet ist,
- Fig. 2: eine ähnliche Ansicht wie Fig. 1 nach Entfernen des herausbeweglichen Dachteils,
- Fig. 3: eine ähnliche Ansicht wie Fig. 2 nach Vorwärtsverlagerung der Unterstützungsträger in die seitlichen Holme des Windschutzscheibenrahmens,
- Fig. 4: eine beispielhafte Ansicht einer Kraftübertragung zwischen einem motorischen Antrieb und dem verlagerbaren Träger für dessen Verlagerung,
- Fig. 5: eine ähnliche Ansicht wie Fig. 3 eines alternativen Fahrzeugs, das als Cabriolet-Fahrzeug ausgebildet ist und bei dem das bewegliche Dachteil über die Heckscheibe verlagerbar und mit dieser in einen Aufnahmeraum unterhalb der Fensterbrüstungslinie einschwenkbar ist,
- Fig. 6: eine teilweise aufgebrochene Ansicht des Fahrzeugs nach Fig. 5 von oben,

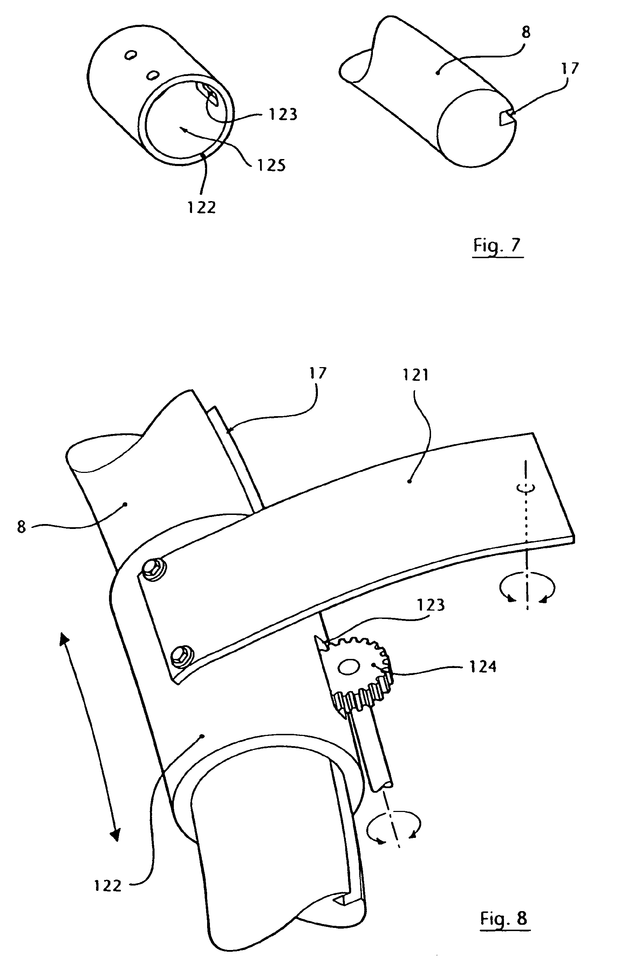

- Fig. 7: eine Detaildarstellung der auf dem Träger geführten Hülse und des von dieser umgriffenen Trägers,
- Fig. 8: eine Detailansicht der auf dem Träger geführten Hülse und eines Antriebs für deren Verlagerung,
- Fig. 9: einen nahe dem Heckfenster angeordneten Aufsteller für den hinteren Bereich des beweglichen Dachteils, sofern dieses über die Heckscheibe verlagerbar ist.

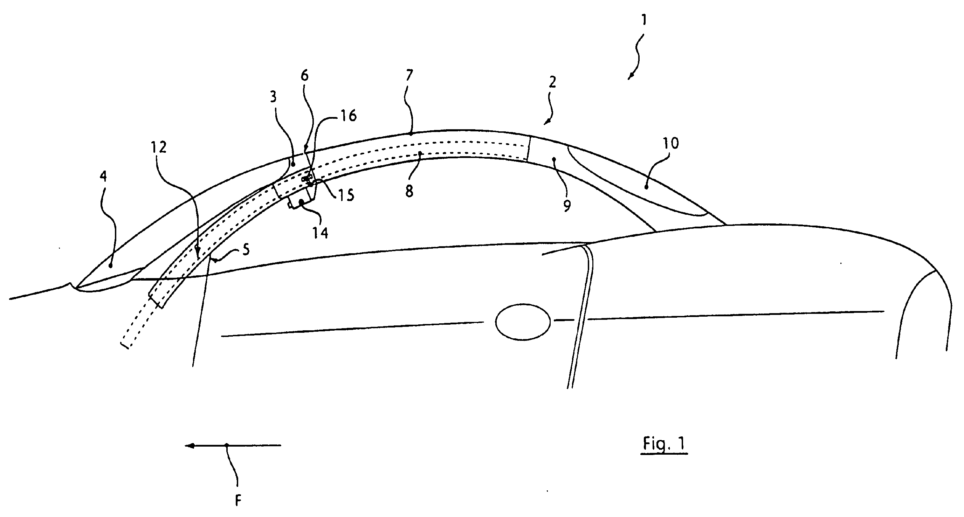

Das in Fig. 1 dargestellte Kraftfahrzeug 1 umfaßt ein insgesamt mit 2 bezeichnetes Dach. Dieses schließt entgegen der Fahrtrichtung F an den oberen Randbereich eines Windschutzscheibenrahmens 3, der eine Windschutzscheibe 4 umgreift, an. Der Windschutzscheibenrahmen 3 umfaßt seitliche Holme 5 und einen oberen Querrahmenteil 6.

Das Dach 2 umfaßt ein bewegliches Dachteil 7, das über seitliche Träger 8 abstützbar ist. Des weiteren ist ein hinteres Dachteil 9 ausgebildet, in dem die Heckscheibe 10 gelegen ist.

Abweichend von der Darstellung, kann das bewegliche Dachteil 7 auch mehrere hintereinander liegende Abschnitte umfassen. Auch ist es möglich, daß hinter dem Dachteil 7 mehr als ein weiteres Dachteil 9 anschließt.

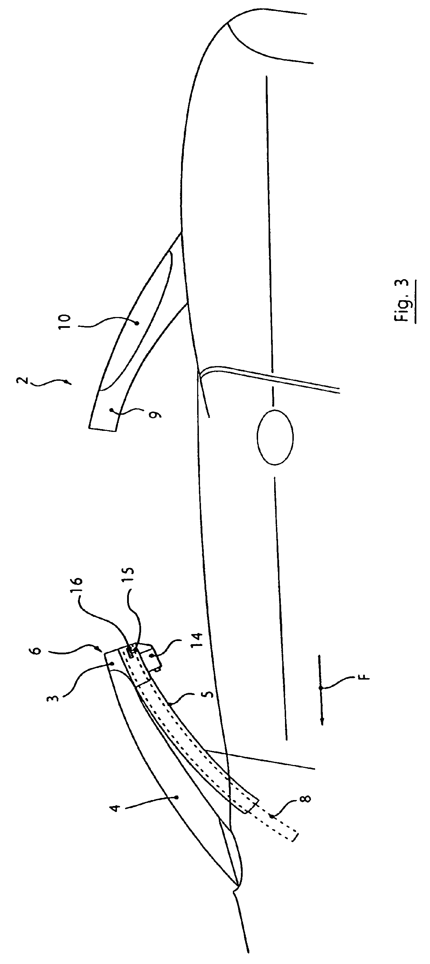

In dem Ausführungsbeispiel nach den Figuren 1 bis 3 ist das Kraftfahrzeug 1 als Targa-Fahrzeug ausgebildet, d. h., daß das Dachteil 7 vollständig geöffnet - beispielsweise entfernt - werden kann, ebenso wie die Träger 8 (sh. Fig. 3), das hintere Dachteil 9 jedoch stehenbleibt.

Um eine derartige Dachöffnung zu ermöglichen, wird gemäß den Figuren 1 bis 3 zunächst das bewegliche Dachteil 7 entfernt. Dieses kann beispielsweise aus Kunststoff oder Plexiglas bestehen, um ein relativ geringes Gewicht zu haben. Auch metallische Werkstoffe sind möglich. Dabei bleiben zunächst seitliche Träger 8 stehen, die beispielsweise an ihrem rückwärtigen Ende in zentrierenden Eingriffskegeln 11 im Bereich des hinteren Dachteils 9 aufgenommen sein können.

Die seitlichen Holme 5 des Windschutzscheibenrahmens 3 bilden Führungskanäle 12 aus, in denen die seitlich verlaufenden Längsträger 8 aufgenommen werden können. Hierzu ist entweder ein zentraler - etwa elektrischer oder hydraulischer - Antriebsmotor oder zwei seitliche, miteinander zwangssynchronisierte Antriebsmotore 14 vorgesehen, die über eine Welle 15 auf ein Ritzel 16 einwirken, das in eine ausgenommene Nut 17 des Trägers 8 eingreift. Die Nut 17 kann beispielsweise eine Zahnschiene 18 aufweisen, die mit dem Ritzel 16 zusammenwirkt. Auch andere Antriebsvermittler sind möglich. Ebenso ist eine manuelle Verlagerung der Träger 8 denkbar.

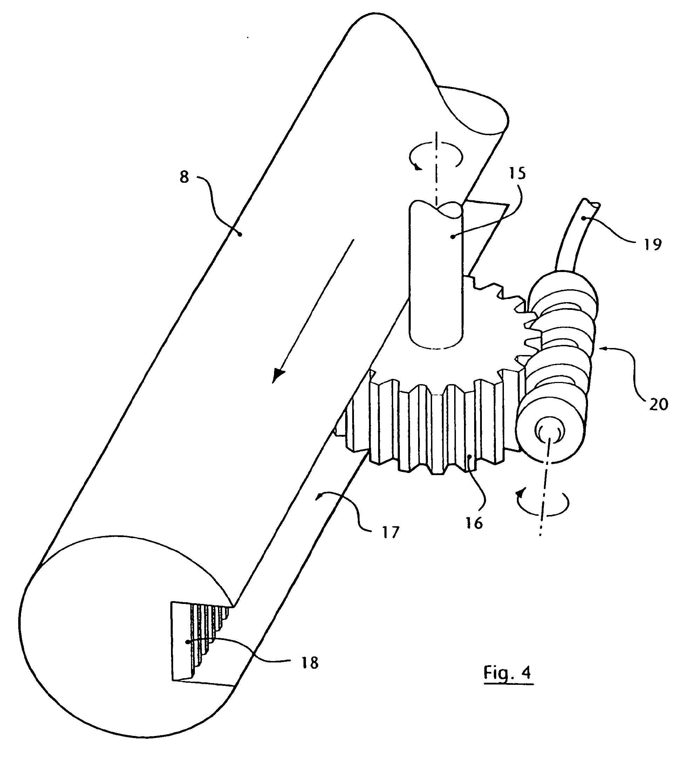

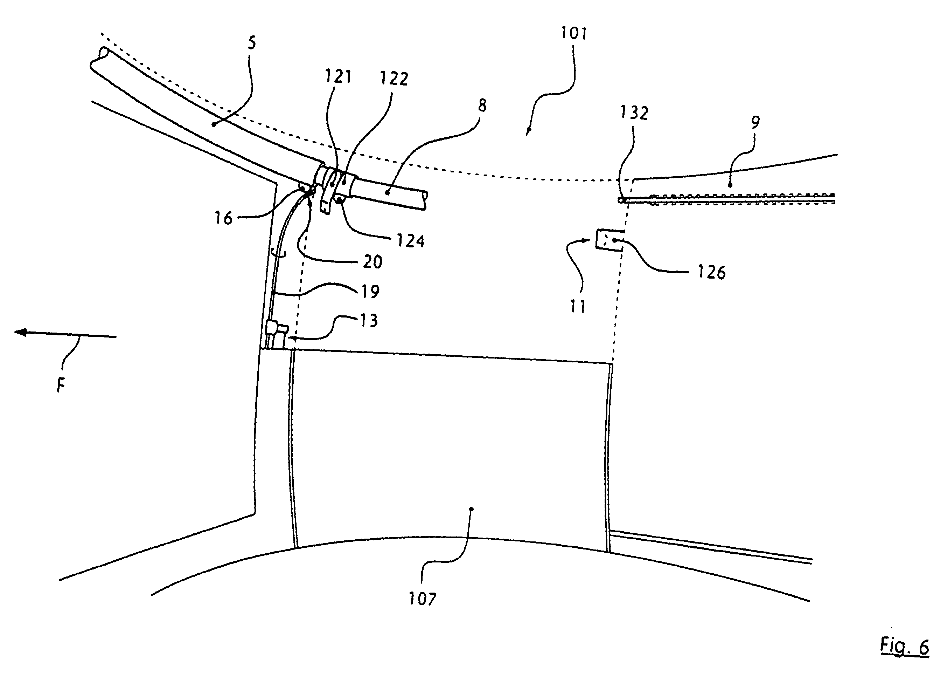

Wie in Fig. 4 und 6 dargestellt ist, kann auf das Ritzel 16 auch ein zentraler Antriebsmotor 13 einwirken, der beispielsweise über eine entsprechende gebogene Welle 19 und ein Schneckengetriebe 20 das Ritzel 16 bewegt. Der Antrieb 13 kann dabei für beide Fahrzeugseiten zwangssynchronisiert arbeiten.

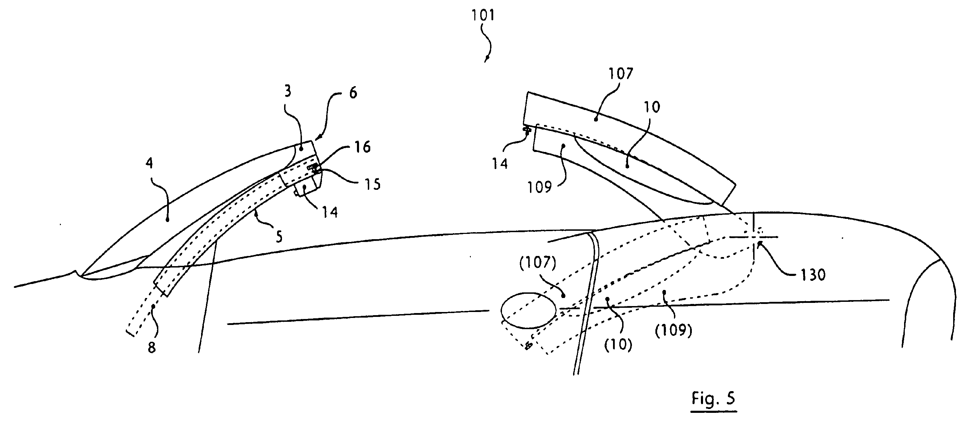

In Fig. 5 ist eine weitere Ausbildung eines Kraftfahrzeugs 101 gezeigt, das als Cabriolet-Fahrzeug ausgebildet ist. Das bewegliche Dachteil 107 schiebt sich hierbei über das hintere Dachteil 109. Beide können dann um eine gemeinsame Schwenkachse 130, die im rückwärtigen Fahrzeugbereich liegt, nach unten verlagert werden. Auch andere Verlagerungsmechanismen sind möglich.

Um das bewegliche Dachteil 107 über das hintere Dachteil 109 schieben zu können, ist der vordere Endbereich des Dachteils 107 über eine elastisch verformbare Verbindung 121, hier ein Federstahlblech, mit einer den Träger 8 teilweise oder vollständig umgreifenden Hülse 122 verbunden. Die Hülse 122 weist im gezeichneten Ausführungsbeispiel eine Ausnehmung 123 auf, durch die hindurch ein Ritzel 124 in die Nut 17 des Trägers 8 eingreifen kann.

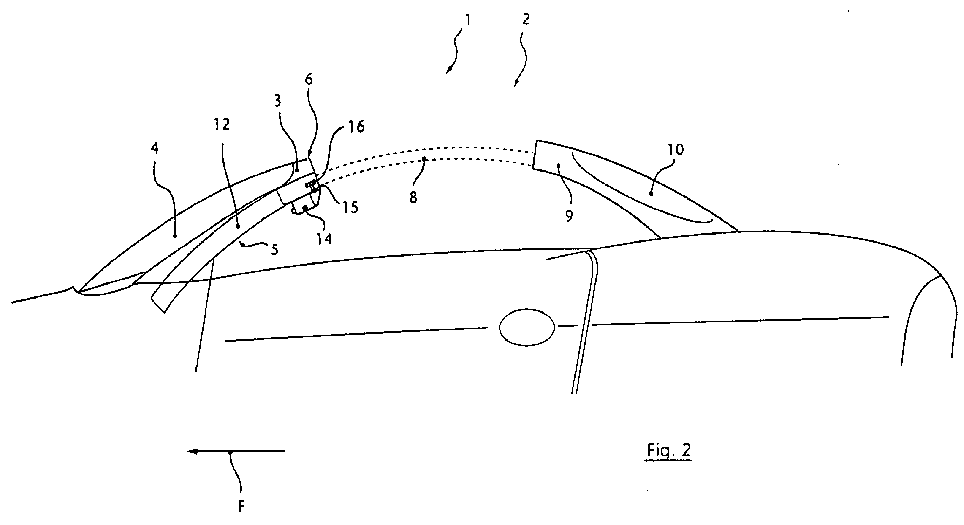

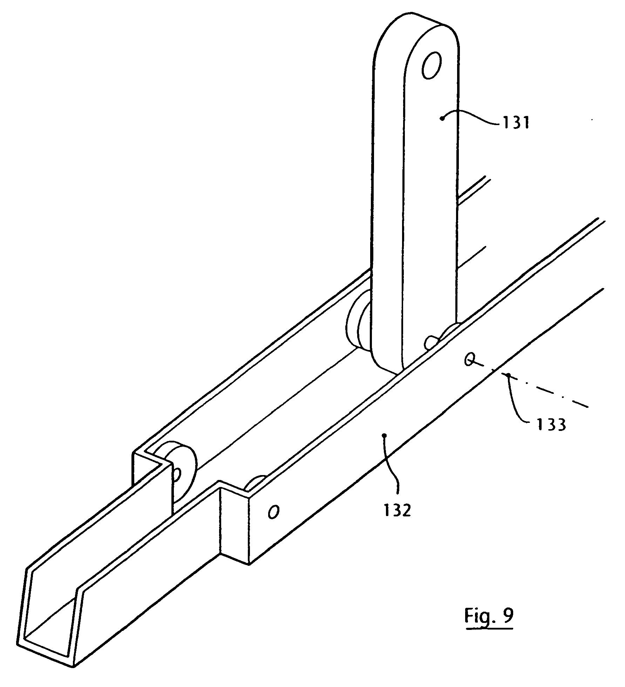

Die Hülse 122 ist nahezu spielfrei auf dem Träger 8 gehalten und auf diesem längsbeweglich, wodurch mittels Antriebs des Ritzels 124 die Längsverschiebung des an der Hülse 122 hängenden Dachteils 107 bewirkt werden kann. Hierzu bildet die Hülse 122 einen umgriffenen Querschnitt 125, der im wesentlichen der Erstreckung des Trägers 8 entspricht. Weiterhin ist, um bei dem Verlagern des Dachteils 107 nach hinten eine Kollision mit dem dahinter liegenden Dachteil 109 zu vermeiden, ein Aufsteller 131 vorgesehen, der in Fig. 9 dargestellt ist und in einem seitlichen Rahmenteil 132 (sh. Fig. 6) schwenkbar angeordnet ist. Der Aufsteller 131 kann um die horizontale Achse 133 aufschwenken, um somit bei Rückwärtsverlagerung des Dachteils 107 auf dessen rückwärtigen Teil im Sinne eines Anhebens einzuwirken und damit das Überlaufen des hinteren Dachteils 109 zu ermöglichen. Der Aufsteller 131 kann mit dem Antrieb für das Ritzel 124 verbunden sein, so daß die Rückwärtsverlagerung durch Drehung des Ritzels 124 und damit Abgleiten der Hülse 122 auf dem Träger 8 und die Aufstellbewegung über Aufschwenken des Ausstellers 131 miteinander synchronisiert sind. Dadurch gelangt das Dachteil 107 in eine beispielsweise, wie in Fig. 5 dargestellt ist, über dem hinteren Dachteil 109 liegende Stellung, bei der jedoch - ähnlich wie in Fig. 2 - die Trägerteile 8 zunächst noch in der ausgefahrenen Stellung verbleiben und erst nach Ende der Öffnung des Dachteils 107, wenn die Hülsen 122 auf Rohrstummel 126 des hinteren Dachteils 109 aufgeschoben sind, nach vorne verlagert werden. Hierzu können die Träger 8 durch Drehung der oben beschriebenen Ritzel 16 in die A-Säulen 5 eingezogen werden, so daß sich der in Fig. 4 gezeigte Targa-ähnliche Zustand ergibt.

Es ist möglich, daß dieses einen Fahrzustand des Fahrzeugs 101 darstellt, somit ein Targa-Fahrzeug gebildet ist. Im weiteren kann jedoch auch der hintere Dachbereich 109 um die Schwenkachse 130 abwärts verschwenkt werden, so daß das gesamte Dachpaket unterhalb der Fensterbrüstungslinie liegt und ein vollständig offenes Cabriolet-Fahrzeug geschaffen ist.

## Patentansprüche

1. Kraftfahrzeug (1;101) mit zumindest einem beweglichen Dachteil (7;107), das im geschlossenen Zustand an den oberen Endbereich (6) eines Windschutzscheibenrahmens (3) anschließt, **dadurch gekennzeichnet, daß** den seitlichen Außenbereichen des Dachteils (7;107) bewegliche Unterstützungsträger (8) zugeordnet sind, die zur Ausbildung eines offenen Dachbereichs zumindest bereichsweise in seitliche Holme (5) des Windschutzscheibenrahmens (3) verlagerbar sind.

2. Kraftfahrzeug nach Anspruch 1, **dadurch gekennzeichnet, daß** die seitlichen Holme (5) des Windschutzscheibenrahmens (3) jeweils einen Aufnahmekanal (12) für die seitlichen Träger (8) bilden, dessen Ausmaß im wesentlichen dem Ausmaß des Trägers (8) entspricht.

3. Kraftfahrzeug nach einem der Ansprüche 1 oder 2, **dadurch gekennzeichnet, daß** die Träger (8) rohrförmig ausgebildet sind.

4. Kraftfahrzeug nach einem der Ansprüche 1 bis 3, **dadurch gekennzeichnet, daß** die Träger in eingezogener Stellung über die seitlichen Holme (5) des Windschutzscheibenrahmens (3) hinaus nach unten in einen aufnehmenden Karosseriebereich ragen.

5. Kraftfahrzeug nach einem der Ansprüche 1 bis 4, **dadurch gekennzeichnet, daß** die Träger (8) motorisch verlagerbar sind.

6. Kraftfahrzeug nach einem der Ansprüche 1 bis 5, **dadurch gekennzeichnet, daß** das bewegliche Dachteil (7) herausnehmbar ist.

7. Kraftfahrzeug nach einem der Ansprüche 1 bis 5, **dadurch gekennzeichnet, daß** das Dachteil (107) in die Fahrzeugkarosserie absenkbar ist.

8. Kraftfahrzeug nach einem der Ansprüche 1 bis 7, **dadurch gekennzeichnet, daß** das Fahrzeug (1;101) ein Targa-Fahrzeug bildet.

9. Kraftfahrzeug nach einem der Ansprüche 1 bis 8, **dadurch gekennzeichnet, daß** das Fahrzeug (101) ein Cabriolet-Fahrzeug bildet.

10. Kraftfahrzeug nach Anspruch 9, **dadurch gekennzeichnet, daß** das bewegliche Dachteil (107) über oder unter zumindest ein weiteres, heckseitig an dieses anschließendes Dachteil (109) verlagerbar ist und mit diesem oder den weiteren Dachteil(en) (109) in die Karosserie absenkbar ist.

11. Kraftfahrzeug nach einem der Ansprüche 1 bis 9, **dadurch gekennzeichnet, daß** das bewegliche Dachteil (7;107) mehrere, im geschlossenen Zustand im wesentlichen hintereinanderliegende Abschnitte umfaßt.

## Claims

1. A motor vehicle (1; 101) comprising at least one movable roof part (7; 107) which, when closed, adjoins the upper end region (6) of a windscreen frame (3), **characterised in that** the outer lateral areas of the roof part (7; 107) have movable supports (8) assigned to them, which can be shifted at least partially into lateral columns (5) of the windscreen frame (3) to form an open roof area.

2. The motor vehicle according to claim 1, **characterised in that** each lateral column (5) of the windscreen frame (3) forms an accommodating canal (12) for the lateral supports (8) which has substantially the same dimensions as the support (8).

3. The motor vehicle according to any one of claims 1 or 2, **characterised in that** the supports (8) are tubular.

4. The motor vehicle according to any one of claims 1 to 3, **characterised in that**, when retracted, the supports extend downwardly beyond the lateral columns (5) of the windscreen frame (3) into an accommodating vehicle body region.

5. The motor vehicle according to any one of claims 1 to 4, **characterised in that** the supports (8) are motor-displaceable.

6. The motor vehicle according to any one of claims 1 to 5, **characterised in that** the movable roof part (7) can be taken out.

7. The motor vehicle according to any one of claims 1 to 5, **characterised in that** the roof part (107) can be lowered into the vehicle body.

8. The motor vehicle according to any one of claims 1 to 7, **characterised in that** the vehicle (1; 101) constitutes a Targa vehicle.

9. The motor vehicle according to any one of claims 1 to 8, **characterised in that** the vehicle (101) constitutes a convertible vehicle.

10. The motor vehicle according to claim 9, **characterised in that** the movable roof part (107) can be moved over or under at least one further roof part (109) which rearwardly adjoins the roof part (107) and can be lowered into the vehicle body together with the roof part (107) or the further roof part(s) (109).

11. The motor vehicle according to any one of claims 1 to 9, **characterised in that** the movable roof part (7; 107) comprises a plurality of sections which are substantially located behind each other in the closed state.

## Revendications

1. Véhicule automobile (1; 101), comprenant au moins un élément de toit déplaçable (7; 107) qui, en état fermé, est contigu à la région d'extrémité supérieure (6) d'un cadre de pare-brise (3), **caractérisé en ce que** des supports déplaçables (8) sont associés aux régions extérieures latérales dudit élément de toit (7; 107), lesdits supports (8) pouvant être déplacés au moins partiellement vers l'intérieur de montants latéraux (5) du cadre de pare-brise (3) pour réaliser une région de toit ouverte.

2. Véhicule automobile selon la revendication 1, **caractérisé en ce que** chaque montant latéral (5) du cadre de pare-brise (3) constitue un canal de logement (12) pour les supports latéraux (8) qui présente sensiblement les mêmes dimensions que le support (8).

3. Véhicule automobile selon l'une quelconque des revendications 1 ou 2, **caractérisé en ce que** les supports (8) sont de forme tubulaire.

4. Véhicule automobile selon l'une quelconque des revendications 1 à 3, **caractérisé en ce que** les supports, en position escamotée, font saillie des montants latéraux (5) du cadre de pare-brise (3) vers le bas de manière à entrer dans une région de logement de la carrosserie du véhicule.

5. Véhicule automobile selon l'une quelconque des revendications 1 à 4, **caractérisé en ce que** les supports (8) sont déplaçables à moteur.

6. Véhicule automobile selon l'une quelconque des revendications 1 à 5, **caractérisé en ce que** l'on peut enlever l'élément de toit déplaçable (7).

7. Véhicule automobile selon l'une quelconque des revendications 1 à 5, **caractérisé en ce que** l'on peut abaisser l'élément de toit (107) dans la carrosserie du véhicule.

8. Véhicule automobile selon l'une quelconque des revendications 1 à 7, **caractérisé en ce que** le véhicule (1; 101) se présente sous forme d'un véhicule Targa.

9. Véhicule automobile selon l'une quelconque des revendications 1 à 8, **caractérisé en ce que** le véhicule (101) se présente sous forme d'un véhicule cabriolet.

10. Véhicule automobile selon la revendication 9, **caractérisé en ce que** l'on peut déplacer l'élément de toit déplaçable (107) au-dessus ou au-dessous d'au moins un élément de toit additionnel (109) qui est contigu à l'extrémité arrière de l'élément de toit (107) et que l'on peut abaisser dans la carrosserie ensemble avec l'élément de toit (107) ou le(s) élément(s) de toit additionnel(s) (109).

11. Véhicule automobile selon l'une quelconque des revendications 1 à 9, **caractérisé en ce que** l'élément de toit déplaçable (7; 107) comprend plusieurs sections sensiblement disposées, à l'état fermé, les unes derrière les autres.
